# EUROPEAN PATENT APPLICATION

(11) **EP 1 857 205 A1**
(43) Date of publication of application: **21.11.2007**
(21) Application number: 06728734.2
(22) Date of filing: 01.03.2006
(51) Int. Cl.: B22F 9/24, B01J 37/02, B01J 37/03, B01J 37/16, B22F 1/00, H01M 4/88

(54) **SINGLE CRYSTALLINE NOBLE METAL ULTRATHIN FILM NANOPARTICLES FORMED USING, AS REACTION FIELD, ADSORBED MICELL FILM FORMED AT SOLID/LIQUID INTERFACE AND PROCESS FOR PRODUCING THE SAME**

(30) Priority: 02.03.2005 JP 2005057159; 27.10.2005 JP 2005313412
(71) Applicant: Japan Science and Technology Agency, Kawaguchi-shi, Saitama 332-0012 (JP)
(72) Inventor: KIJIMA, Tsuyoshi, yazaki, 8892153 (JP); KAWASAKI, Hideya, ka, 8130043 (JP)
(74) Representative: Heunemann, Dieter
(86) International application number: PCT/JP2006/304415
(87) International publication number: WO 2006/093317

(57) **Abstract**

It is aimed at creating noble metal nanoparticles having novel shapes, sizes, and arrangements usable for catalysts, electrodes, and the like.

Micelles made into rod-like shapes having semicylindrical cross-sections are formed on a carrier substrate in a self-creating manner and immobilized thereon; noble metal ions are added and diffused in the micelles to complex the micelles with noble metal ions; and a reducing agent is subsequently caused to act thereon to progress a reductive reaction of noble metal within the immobilized micelles as reaction fields, thereby growing single crystalline noble metal ultrathin-film nanoparticles on the carrier substrate by utilizing the fixed micelles having the shapes as templates, respectively.

## Description

### TECHNICAL FIELD

The present invention relates to a novel noble metal ultrathin-film-like nanoparticle including, as a main component, noble metal such as platinum usable as: a catalyst to be used in various chemical reactions; an electrode to be provided for various electrochemical reactions, such as an electrolysis electrode; and a fundamental material or functional element for photonics, electronics, and information technologies such as temperature, pressure, and gas sensor elements; in various industries and environmental fields such as fuel cell-oriented catalyst, and catalyst for treatment of vehicular exhaust gas, utilizing chemical, electrochemical, and magnetic characteristics of metal platinum; and also relates to a production method of such a noble metal ultrathin-film-like nanoparticle.

### BACKGROUND ART

Noble metal elements have excellent workability, heat resistance, oxidation resistance, corrosion resistance, electrochemical property, and unique magnetism, and spectroscopic and chemical natures by virtue of "d" electrons of the elements themselves, and have been utilized from long ago as materials for decoration, materials for physical and chemical tools such as crucible, materials for electric industry such as thermocouples, electric contacts, and materials for electronic industry such as paste, and as catalysts, insoluble electrodes, and high-performance magnets.

Among the noble metal elements, platinum is extremely important from an industrial aspect as a catalyst having a function for promoting a chemical reaction similarly to the other metals of the platinum group, and is being widely used in fields such as petroleum purification, petrochemical industry, vehicular and factory exhaust gas purification, synthesis gas production, and medicine/fat and oil production.

Metal catalysts represented by a platinum catalyst are each typically prepared by introducing a metal component into silica, alumina, zeolite, activated carbon, or the like by an impregnation method, ion-exchange method, coprecipitation method, or the like by using a water solution of a metal salt, followed by treatment such as firing, hydrogen reduction, and the like (non-patent reference 1).

Namely, metal catalysts are each provided for reactions in a form of complex particles comprising solid carriers carrying metal particles on the surfaces thereof, such that activities of the metal catalysts are changed by the kinds of the metals, as a matter of course, sizes of carried metal fine particles, kinds of crystal faces, kinds of carriers, and the like, and control of sizes of fine particles is particularly important. Diameters of metal fine particles depend on preparation conditions, and, for example, it has been reported that an averaged particle size of platinum fine particles carried on zeolite by adopting tetraamminedichloroplatinum as a starting material is made 6 nm by air firing, and 1 nm or less by vacuum firing (non-patent reference 2).

Further, relationships between activities of metal catalysts and particle sizes thereof are made different depending on intended reactions, and there have been also reported a system where an activity is lowered as a particle size is decreased (example: dehydrogenation reaction of 2,3-dimethylbutane by Pt/activated carbon), a system where an activity is rather increased (example: hydrocracking reaction of methyl-cyclopentane by Pt/alumina), a system where an activity is maximized at a certain particle size (isomerization reaction of n-hexane by Pt/CaY), and a system where an activity is independent of particle sizes (oxidation reaction of SO₂ and H₂ by a Pt catalyst) (non-patent reference 3).

Thus, as a preparation method of a platinum catalyst, there has been reported a method for conducting liquid-phase reduction in the presence of a protective agent such as polyvinyl-pyrrolidone to thereby prepare noble metal colloids, in addition to various modifications of the above-described typical methods (non-patent reference 4).

Further, it has been recently reported that platinum particles and platinum wires each having diameters of 2.5 nm are obtained by photo-reducing or hydrogen-reducing chloroplatinic acid introduced into pores of mesoporous silica, such that the former exhibit an activity several tens times as high as that of the latter in terms of a hydrogenation reaction of butane (non-patent reference 5).

In addition the above-described non-porous metal fine particles in the shapes of sphere, wire, and the like, there is being conducted production of mesoporous metals by adopting a technique of template-based synthesis (non-patent reference 6).

The template-based method was originated in 1992 from a fact that Mobil Co., Ltd. succeeded in creating mesoporous silica having honeycomb mesopores of 2 to 8 nm by adopting a surfactant as a template (non-patent reference 7). After that, there have been synthesized many kinds of mesoporic bodies having various metal oxides or sulfides as frame components other than silica, by similar techniques (non-patent reference 8).

Also concerning metals, there has been synthesized mesoporous platinum in particulate shapes having pore diameters of about 3 nm by reducing chloroplatinic acid by hydrazine or the like while adopting micelles of nonionic surfactant as a template (non-patent reference 9), and there have been also fabricated mesoporous platinum (non-patent reference 10) and tin (non-patent reference 11) in a film shape by electrodeposition of micelle liquid crystal comprising a metal salt and a surfactant.

There have been obtained porous platinum particles each having an outer diameter of 50 to 400 nm and comprising a frame structure made of platinum wires having diameters of 3 nm and mutually coupled in a three-dimensional network shape, by impregnating the mesoporous silica MCM-48 having the three-dimensional pore structure as synthesized by the above-described surfactant template-based method, followed by hydrogen reduction at a high-temperature (non-patent reference 12).

Similarly, there have been obtained mesoporous platinum and gold (Au) having pore diameters of about 70 nm by adopting aluminum anode oxide film of porous solid as a template (non-patent reference 13), and porous gold (Au) by adopting polystyrene latex (non-patent reference 14).

There has also been synthesized mesoporous platinum having a specific surface area of 47m²/g by a method adopting supercritical CO₂ as a solvent and a black lead crystallite as a template (non-patent reference 15). Further, there has been also obtained mesoporous platinum having a specific surface area of 150m²/g and shell-like pores of an averaged size of 20 nm by coating hexachloro platinic acid onto surfaces of silica particles having an averaged diameter of 20 nm, followed by heating reduction and subsequent removal of silica (non-patent reference 16).

Meanwhile, particles in hollow tube shapes having outer diameters of several nm to several hundreds nm and inner diameters of several angstroms to several tens nm are called "nanotubes", and the carbon nanotube discovered as a deposited substance on an arc electrode in 1991 was the first example of an artificial inorganic nanotube (non-patent reference 17). Thereafter, in addition to those based on nitride and sulfide by high-temperature synthesis, there have been reported oxide-based nanotubes one after the other, such as nanotubes made of vanadium oxide (non-patent reference 18), silica (non-patent reference 19), titania (non-patent reference 20), and rare earth oxide by the present inventors (non-patent reference 21), and the like, by the above-described template-based method.

Concerning noble metals, there have been fabricated gold nanotubes (non-patent references 22 and 23) having substantially uniform inner diameters of about 1 nm or more, and palladium nanotubes (non-patent reference 24) having thicknesses of 4 to 5 nm, by a two-step electroless plating reaction by adopting a polycarbonate porous membrane as a template. Further, the present inventors have developed a technique to reduce chloroplatinic acid by adopting liquid crystal comprising two kinds of surfactants as a template, thereby producing nanotubes made of noble metal such as platinum and palladium having outer diameters of 6 to 7 nm and inner diameters of 3 to 4 nm (patent-related reference 1 and non-patent reference 25).

There have been also reported platinum particles grown in a two-dimensional or three-dimensional dendric manner by adopting a surfactant (non-patent reference 26). Y. Song et al have synthesized spherical platinum particles having diameters of 10 to 70 nm obtained by platinum grown in a three-dimensional dendric manner, by conducting light irradiation to a water solution containing sodium dodecyl sulfate (SDS) or Brij-35 (polyoxyethylene lauryl ether) acting as a surfactant, chloroplatinic acid, and ascorbic acid. Further, they have found that single crystal particles in dendric shapes having diameters of about 10 nm are produced by adding a small amount of tin porphyrin. Furthermore, there have been obtained disk-like platinum particles in two-dimensional dendric shapes having diameters of about 50 nm, in case of adoption of liposome instead of a surfactant.

In turn, it has been reported that extremely thin film-like particles (platinum nano-sheets having thicknesses of about 2 to 3 nm) were synthesized by introducing chloroplatinic acid into gaps (0.335 nm) between graphite layers, and hydrogen-reducing it (non-patent reference 27).

According to patent-related references, it has been reported: to deposit metal nanoparticles including noble metal by virtue of an action of a surfactant as a reducing agent from a solution including transition metal ions and noble metal ions in the presence of the surfactant (patent-related reference 2); or to dissolve inorganic metal salts in a solution containing a surfactant, thereby depositing metal nanoparticles having diameters in an order of nanometer by virtue of a reductive action of the surfactant (patent-related reference 3).

It has been further reported to add: a reversed micelle solution (II) prepared by mutually mixing a nonaqueous organic solvent containing a surfactant and a pertinent type of metal salt solution containing noble metal; into a reversed micelle solution (I) prepared by mutually mixing a nonaqueous organic solvent containing a surfactant and a water solution of reducing agent; followed by a reductive reaction, to produce metal nanoparticles in the resultant solution (patent-related reference 4).

It has been also reported to dissolve an organometallic compound of fatty acid, a metal complex of amine, or a mixture thereof in a nonpolar solvent, followed by addition of a reducing agent for reduction treatment, thereby obtaining metal nanoparticles in the solution (patent-related reference 5).

Moreover, it has been reported to add a reducing agent into a metal salt solution containing a surfactant, and to irradiate light thereto, followed by a reaction under still standing in a dark place, thereby growing metal nanorods in the solution (patent-related reference 6).

Furthermore, it has been also reported to cause metal nanoparticles to be attached onto a substrate without using a crosslinking agent, and to grow nanoparticles on the substrate by utilizing the attached nanoparticles as nuclei, to coat a surface of the substrate (patent-related reference 7).

Referenced literatures/publications:
Non-patent reference 1: Hiroh Tominaga, and 1 other, Chemical Outline, "Catalyst Design", edited by Chemical Society of Japan, 1982, pp. 50-63,
Non-patent reference 2: Masayuki Uchida, and 2 others, Catalyst, 22, 310 (1977)
Non-patent reference 3: Hiromichi Arai, and 1 other, "Ultra-fine particle-Its chemistry and function", Asakura Publishing Co., Ltd., 1993, pp. 124-128
Non-patent reference 4: N. Toshima, and 1 other, Bull. Chem. Soc. Jpn., 65, 400 (1992)
Non-patent reference 5: A. Fukuoka, and 7 others, Catalysis Today, 66, 23-31 (2001)
Non-patent reference 6: Yoshiaki Fukushima, Ceramics, 36, 917-919 (2001)
Non-patent reference 7: C. T. Kresge, and 4 others, Nature, 359, pp. 710-712 (1992)
Non-patent reference 8: Takeshi Kijima, and 1 other, J. Soc. Inorg. Mater, 8, pp. 3-16 (2001)
Non-patent reference 9: G. S. Attard, and 4 others, Angew. Chem. Int. Ed. 36, 1315-1317 (1997)
Non-patent reference 10: G. S. Attard, and 5 others, Science, 278, 838-840 (1997)
Non-patent reference 11: A. H. Whitehead, and 3 others, Chem. Comm., 331-332 (1999)
Non-patent reference 12: H. J. Shin, and 3 others, J. Am. Chem. Soc., 123, 1246-1247 (2001)
Non-patent reference 13: H. Masuda, and 1 other, Science, 268, 1466-1468 (1995)
Non-patent reference 14: O. D. Velev, and 3 others, Nature, 401, 548 (1999)
Non-patent reference 15: H. Wakayama, and 1 other, Chem. Comm., pp. 391-392 (1999)
Non-patent reference 16: Michihiro Asai, and 2 others, Industrial Material, 50, pp. 27-30 (2002)
Non-patent reference 17: S. Iijima, Nature, 364, pp. 56-58 (1991)
Non-patent reference 18: M. E. Spahr, and 5 others, Angew. Chem. Int. Ed, 37, pp. 1263-65 (1998)
Non-patent reference 19: M. Adachi, and 2 others, Langmuir, 15, 7097 (1999)
Non-patent reference 20: H. Imai, and 4 others, J. Mater. Chem, 9, 2971 (1999)
Non-patent reference 21: M. Yada, and 4 others, Adv. Mater., 14, 309-313 (2002)
Non-patent reference 22: C. R. Martin, and 3 others, J. Phys. Chem. B, 105, pp. 11925-11934 (2001)
Non-patent reference 23: K. B. Jirage, and 2 others, Anal. Chem., 71, 4913-4918 (1999)
Non-patent reference 24: V. Badri, and 1 other, Int. J. Hydrogen Energy, 25, 249-253 (2000)
Non-patent reference 25: Takeshi Kijima, and 6 others, Angew. Chem. Int. Ed., 43, 228-232 (2004)
Non-patent reference 26: Y. Song, and 11 others, J. Amer. Chem. Soc., 126, 635-645 (2004)
Non-patent reference 27: M. Shirai, and 2 others, Chem. Comm., pp. 623-624 (1999)

Patent-related reference 1: JP-A-2004-034228
Patent-related reference 2: JP-A-2000-54012
Patent-related reference 3: JP-A-2003-105401
Patent-related reference 4: JP-A-2003-239006
Patent-related reference 5: JP-A-2005-81501
Patent-related reference 6: JP-A-2005-97718
Patent-related reference 7: JP-A-2005-187915

### DISCLOSURE OF THE INVENTION

### PROBLEM TO BE SOLVED BY THE INVENTION

Since noble metal elements, particularly Pt, are finite resources present in extremely small amounts, developments have been conducted to effectively utilize them, under three guidelines: (1) to increase surface areas of a Pt material contributing to reactions, by decreasing particle diameters of the material (particle diameter control), and by uniformly dispersing the material (devise of carrying manner); (2) to devise a structure (form) of the Pt material; and (3) to search for a new material other than Pt.

Under such circumstances for development, there have been extremely numerously developed synthesis techniques for obtaining products controlled at a nano-level based on the template-based synthesis method, as referred to in the above-mentioned literatures and publications. As a result, it has been succeeded in obtaining fine products such as wires in nanometer sizes, particulate or film-like madreporic bodies having pores in a honeycomb shape or a three-dimensional network shape, nanotubes, two-dimensional or three-dimensional dendric particles, and single crystalline spherical particles having diameters of 10 nm, in a manner to show results corresponding to the development objects (1) and (2), thereby exhibiting a prima facie significance. However, the production amounts of noble metal elements, particularly Pt material, are extremely low such that it will be considerably hard to sufficiently deal with a demand to be expected from now on mainly based on fuel cells insofar as in view of the existent amount of the resource and the development level at present. Thus, it is worried that the situation is urgent.

As such, although it has been made possible to obtain particles in nano-sizes by the above-described various techniques to obtain the prima facie result, there has been demanded a technique contributing to more effective utilization of the metals in extremely small amounts. By virtue of such a technique, it can be expected to exemplarily realize improved material designs such as enhanced freedom degrees of material selection and higher performances, in various technical fields utilizing noble metal elements.

Further, in case of the template-based synthesis methods each configured to utilize a molecule aggregate structure to be formed in a solution, there are such exemplary problems that particles caused in the course of production of platinum particles relatively tend to aggregate, and that the molecule aggregate is subjected to a structural change thereof. There is thus demanded a new technique for solving such problems.

Metal catalysts are typically provided in forms of complex particles comprising solid carriers and metal particles carried on surfaces of the solid carriers, and activities of the metal catalysts vary depending on sizes of the carried metal fine particles, kinds of crystal faces, kinds of the carriers, dispersibilities, and coating ratios, respectively. As such, there is demanded a metal particle carrying method capable of simultaneously realizing not only control of size, form, and the like of metal particles, but also a higher dispersibility and a higher coating ratio.

As described above, it has been considerably problematic to use a lot of expensive platinum in practical use of recently noticed solid polymer fuel cells, and it is desired to immediately develop a platinum particle carrier including the metal catalyst in a remarkably decreased amount so as to increase an efficiency of platinum. For example, there is an estimation result that the amount of platinum in the world is insufficient if 10,000,000 fuel cell vehicles are manufactured, insofar as platinum is kept to be used at the rate in the present state. Thus, to decrease the usage amount of platinum, it is naturally an important factor to devise a platinum carrying manner, by exemplarily controlling a form of platinum nanoparticles. However, even when it becomes possible to control the form of platinum nanoparticles, expensive catalyst materials are uselessly consumed when the particles are stacked one above the other upon deposition onto a surface of a carrier. Therefore, in case of depositing particles onto a surface of a carrier, it is extremely important not only to control the form of particles but also to carry the particles thinly on the carrier surface as single layers without stacking the particles one above the other, and there is demanded such a controlling technique.

### MEANS FOR SOLVING THE PROBLEM

The present inventors intend to provide a solution to the demand, in view of the related art including the above-mentioned various investigations and reports and the prior art concerning platinum nanoparticles. Namely, there have been earnestly conducted investigations of a method for immobilizing surfactant micelles at a solid/solution interface (solid-liquid interface two-dimensional micelles), and kinds of metal sources and reducing agents to be utilized, as well as reaction conditions, so as to create noble metal nanoparticles having novel forms different from the conventional, by virtue of a novel synthetic method utilizing, as a template, surfactant micelles immobilized at the solid/solution interface.

As a result, it has been discovered that it is possible to adopt one kind or two kinds of surfactants as well as a carrier substrate to form two-dimensional micelles at solid-liquid interfaces and to reduce by hydrazine a platinum chloride salt previously incorporated into the micelles, in a manner to utilize the micelles immobilized at the graphite carrier surface as reaction fields to reduce platinum ions, thereby producing or growing thinfilm-like particles (thickness: about 2 to 5 nm) each in a shape of disk, rod, plate, or sheet which is extremely thin and has a single crystalline frame of platinum.

It has been appreciated that forms of platinum nanoparticles or the like to be produced by utilizing interiors of micelles as reaction fields, strongly depend on metal salt concentrations in the micelles. The concentrations of metal salt such as noble metal, particularly chloroplatinic acid in micelles which dictate particle forms in this technique, can be changed by using two kinds of surfactants and by varying the mixing ratio thereof, thereby succeeding in enabling control of forms, sizes, and arrangements of metal particles on the carrier substrate surface, and in simultaneously depositing the metal particles thinly as single layers, respectively.

In the present invention, it is required that micelles are formed by one kind or two kinds of surfactants, and the micelles are utilized as reaction fields, and it is desirable to use two kinds of surfactants. This is because, although it is difficult to arbitrarily control micelles as reaction fields and metal salt concentrations in the micelles in case of adoption of one kind of surfactant, this can be facilitated by combining two kinds of surfactants with each other to facilitate controlling of forms, sizes, arrangements, and the like of particles on the carrier substrate surface.

It has been appreciated that platinum ultrathin-film-like particles to be produced by virtue of micelles immobilized on a substrate according to the technique of the present invention are particles controlled in particle form, size, and arrangement relative to the substrate, which particles are different from those bulk particles in indeterminate forms to be deposited from the interior of a solution by the solution reduction method and duly carried, and are different from those particles to be produced from simple micelles which are molecule aggregate templates in varying structures. According to the technique of the present invention, it is possible to produce extremely thin platinum particles on a solid substrate, each having a size of several tens nanometers or more and a thickness of only several nanometers. Because a platinum catalyst provides a reaction only on the surface thereof and the interior of the catalyst does not participate in the reaction, the technique of the present invention is extremely useful in improving a reactivity since platinum particles are thinly carried on a carrier surface in a single layer form. Further, as compared with simple particle forms, the thinfilm-like noble metal nanoparticles exhibit functions and effects of increased surface energies at peripheral portions, thereby resultingly allowing the noble metal nanoparticles to be expected as a catalyst material having a higher catalytic ability.

The technique of the present invention is configured to reduce an extremely small amount of platinum source (only an amount concentrated on a solid surface) concentrated in solid-liquid interface two-dimensional micelles to thereby carry platinum particles on the substrate surface in one step, and is thus capable of remarkably decreasing a usage amount of a platinum source as compared with the conventional technique to be conducted in two steps ("production of platinum particles"+"carriage of platinum particles onto solid surface").

The technique carried out for platinum has been applied to other metals and investigations therefor have been advanced, thereby resultingly obtaining a knowledge that metals other than platinum (Pt) such as gold (Au), silver (Ag), palladium (Pd), rhodium (Rh), iridium (Ir), ruthenium (Ru) and the like can also be subjected to the synthesis as described above. The present invention has been carried out based on such a knowledge, and is configured in the manner described in the following items (1) through (21).

(1) A single crystalline noble metal ultrathin-film determinate-form nanoparticle characterized in that the single crystalline noble metal ultrathin-film determinate-form nanoparticle is produced in a solid-liquid interface two-dimensional micelle acting as a reaction field and formed of one kind or two kinds of surfactants on a carrier substrate;
   that the single crystalline noble metal ultrathin-film determinate-form nanoparticle is constituted of at least one kind of noble metal selected from a group consisting of platinum (Pt), gold (Au), silver (Ag), palladium (Pd), rhodium (Rh), iridium (Ir), and ruthenium (Ru); and
   that the single crystalline noble metal ultrathin-film determinate-form nanoparticle exhibits an ultrathin film shape having a thickness in a range of 2 to 5 nm, and has an arbitrary contour selected from a shape of disk, rod, plate, and sheet.

(2) The single crystalline noble metal ultrathin-film determinate-form nanoparticle of item (1), characterized in that the carrier substrate is any one of graphite, mica, and silica.

(3) The single crystalline noble metal ultrathin-film determinate-form nanoparticle of item (1), characterized in that means for producing the noble metal nanoparticle in the micelle is provided by a reductive reaction conducted within the micelle as the reaction field.

(4) The single crystalline noble metal ultrathin-film determinate-form nanoparticle of item (3), characterized in that the reductive reaction is achieved by hydrazine.

(5) The single crystalline noble metal ultrathin-film determinate-form nanoparticle of any one of items (1) through (3), characterized in that the noble metal nanoparticle is picked up in a state carried by the carrier, by picking up the carrier substrate after the reductive reaction followed by drying.

(6) The single crystalline noble metal ultrathin-film determinate-form nanoparticle of item (5), characterized in that the noble metal particle picked up in the state carried on the carrier is collected by separating the noble metal particle from the carrier substrate.

(7) The single crystalline noble metal ultrathin-film determinate-form nanoparticle of any one of items (1) through (6), characterized in that the noble metal is platinum.

(8) A production method of a single crystalline noble metal ultrathin-film determinate-form nanoparticle, characterized in that the method comprises the steps of:
   preparing a micelle forming solution containing one kind or two kinds of surfactants at a micelle concentration;
   subsequently immersing a carrier substrate into the micelle forming solution, to cause a micelle formed in a rod-like shape having a semicircle cross-section to be formed on and immobilized to the carrier substrate;
   subsequently adding a solution containing a noble metal ion into the micelle to thereby contain the noble metal ion within the micelle at solid-liquid interfaces; and
   subsequently causing a reducing agent to act on the micelle containing therein the metal ion to thereby progress a reductive reaction within the immobilized micelle as a reaction field, to produce a single crystalline noble metal ultrathin-film determinate-form nanoparticle exhibiting a thin-film shape having a thickness in a range of 2 to 5 nm and having an arbitrary contour selected from a shape of disk, rod, plate, and sheet, by utilizing the immobilized micelle as a template.

(9) The production method of a single crystalline noble metal ultrathin-film determinate-form nanoparticle of item (8), characterized in that the two-dimensional micelle as the reaction field is adjusted in shape and size, to thereby adjust a shape and a size of the produced noble metal ultrathin-film determinate-form nanoparticle.

(10) The production method of a si ngle crystalline noble metal ultrathin-film determinate-form nanoparticle of item (8), characterized in that the noble metal ion is one kind of ion selected from platinum (Pt), gold (Au), silver (Ag), palladium (Pd), rhodium (Rh), iridium (Ir), and ruthenium (Ru) ions.

(11) The production method of a single crystalline noble metal ultrathin-film determinate-form nanoparticle of item (8), characterized in that the surfactant for forming the two-dimensional micelle comprises one kind or two kinds of surfactants so that the noble metal thinfilm-like particle is controlled in thickness, shape, and size, by changing the kind of the surfactant, or the kinds of the surfactants and a mixing ratio therebetween.

(12) The production method of a single crystalline noble metal ultrathin-film determinate-form nanoparticle of item (8), characterized in that the noble metal ion within the micelle is changed in concentration, to control the single crystalline platinum thinfilm-like particle in thickness, size, and the like.

(13) The production method of a single crystalline noble metal ultrathin-film determinate-form nanoparticle of item (8), characterized in that the carrier is one kind of carrier selected from graphite, mica, and silica.

(14) The production method of a single crystalline noble metal ultrathin-film determinate-form nanoparticle of item (8), characterized in that the reductive reaction is achieved by hydrazine.

(15) The production method of a single crystalline noble metal ultrathin-film determinate-form nanoparticle of any one of items (8) through (14), characterized in that the noble metal nanoparticle exhibits a single two-dimensional film shape grown to have one side dimension of 50 nm or more.

(16) The production method of a single crystalline noble metal ultrathin-film determinate-form nanoparticle of any one of items (8) through (15), characterized in that noble metal is platinum.

(17) A noble metal catalyst material, characterized in that the noble metal catalyst material includes the single crystalline noble metal ultrathin-film determinate-form nanoparticle of any one of items (1) through (7), to be used as an active ingredient in catalyst design.

(18) The noble metal catalyst material of item (17), characterized in that the noble metal catalyst material is used in catalyst design for fuel cell.

(19) The noble metal catalyst material of item (17), characterized in that the noble metal catalyst material is used for designing a vehicular exhaust gas purifying catalyst.

(20) A noble metal electrode material, characterized in that the noble metal electrode material includes the single crystalline noble metal ultrathin-film determinate-form nanoparticle of any one of items (1) through (7), to be used as an electrode designing material for cell or electrolysis.

(21) A noble metal sensor material, characterized in that the noble metal sensor material includes the single crystalline noble metal ultrathin-film determinate-form nanoparticle of any one of items (1) through (7), to be used as a sensor designing material.

According to the present invention as described above, it becomes possible to provide single crystalline noble metal ultrathin-film nanoparticles each satisfactorily controlled to be in a thin-film shape of disk, rod, plate, or sheet with a thickness of 2 to 5 nm. Further, the particles can be readily controlled in form, size, and the like and carried on a carrier substrate surface with arbitrary forms, sizes, and arrangements in a controlled manner, by varying a concentration of a starting noble metal salt, such as kinds and mixing ratio of one kind or two kinds of surfactants, a concentration of chloroplatinic acid, and the like.

Particles intended by the present invention are single crystalline noble metal ultrathin-film nanoparticles each having a thickness of 2 to 5 nm and exhibiting an ultrathin-film shape selected from disk, rod, plate, and sheet shapes, and can be grown with a controlled arrangement thereof, by steps of: immobilizing micelles onto a carrier substrate such as made of graphite; and conducting a reductive reaction within the immobilized micelles to produce single crystalline noble metal particles such as thinfilm-like platinum particles on the substrate having the formed micelles thereon.

Examples of surfactants usable for forming micelles in the present invention concretely include one kind or two kinds of nonionic or ionic surfactants selected from a group consisting of: polyoxyethylene alkyl ether such as nonaethyleneglycol monohexadecyl ether; polyoxyethylene fatty acid esters; organic sulfates such as dodecyl sodium sulfate, dodecyl sodium benzenesulfonate; alkyl ammonium salts such as hexadecyltrimethyl ammonium bromide; amine oxides such as dodecyldimethyl amine oxide; polyoxyethylene sorbitan ester such as polyoxyethylene sorbitan monostearate; polyoxyethylene alkylphenyl ether; and polyoxyethylene polyoxypropylene block polymer.

In case of selecting polyoxyethylene alkyl ethers, larger polymerization degrees of polyoxyethylene chains tend to lead to increased thicknesses of thinfilm-like platinum particles to be produced, so that the target of polymerization degree is 40 or more. Concerning a mixing ratio of two kinds of surfactant materials in case of a nonionic surfactant based mixture system such as polyoxyethylene sorbitan ester with polyoxyethylene alkyl ether, massive platinum particles are caused by mixing ratios of 50% or less of polyoxyethylene sorbitan ester, so that such mixing ratios are unsuitable for preparation of single crystalline thinfilm-like platinum particles.

On the other hand, when the ratio of polyoxyethylene sorbitan ester is 60% or more, larger ratios lead to larger thicknesses of thinfilm-like platinum particles to be produced.

Further, in case of adoption of alkylamine oxide, the protonation degree of alkylamine oxide is preferably 0.3 or less. Protonation degrees of alkylamine oxide exceeding 0.3 lead to massive platinum particles on a substrate, thereby making it difficult to produce thin particles.

To be added into the water solution of the above selected, mixed, and adjusted surfactant, is one kind of platinum complex compound selected from a group consisting of platinum complex compounds such as hexachloro platinate. Desirable concentration ranges of the platinum complex compound is 1 mM to 10 mM. Adjusting a concentration of a platinum complex compound enables to control a thickness and a surface coating ratio of thinfilm-like platinum particles to be produced. Note that the platinum solution may be added after formation of micelles.

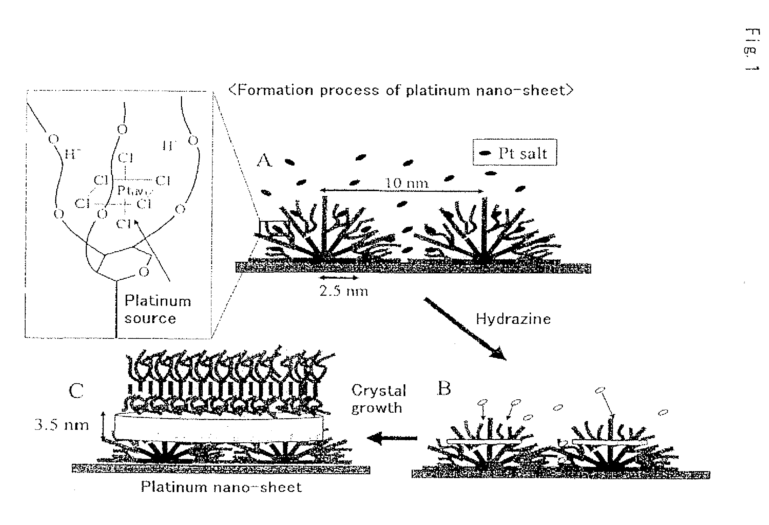

The concentration of the surfactant is preferably near a critical micelle concentration (CMC), and desirably in a range of 0.1 mM to 10 mM. Immersing a graphite substrate in the reaction solution spontaneously forms semicylindrical micelles at a graphite/solution interface. The micelles form complexes with the platinum complex compound, and act as templates for growth of thinfilm-like platinum particles ("A" in FIG. 1).

Added into the mixed water solution of the surfactant and platinum salt is a reducing agent such as hydrazine so as to reduce the platinum salt, thereby growing thinfilm-like platinum particles within the micelles immobilized to the graphite substrate ("B" in FIG. 1). This produces platinum thinfilm-like nanoparticles ("C" in FIG. 1) characterized in that the nanoparticles are single crystalline thinfilm-like particles (thickness: about 2 to 5 nm) which are each extremely thin and has a frame of platinum (Pt) as a noble metal element, and which are each a single crystal body. In the present invention, there is adopted a reducing agent having a higher production efficiency of metal clusters (nuclei for growth of nanoparticles). Desirably, hydrazine as a chemical reducing agent is used.

As described above, the production method is capable of producing noble metal thinfilm-like particles including a group consisting of gold (Au), silver (Ag), palladium (Pd), rhodium (Rh), iridium (Ir), and ruthenium (Ru), in addition to platinum (Pt).

One kind or two kinds of surfactants are added into a water solution containing, at a predetermined concentration, one or more kinds of metal salts or metal complex compounds selected from a group consisting of noble metal salts such as nitrate, chloride, metal chloride acid, or noble metal complex compounds of gold (Au), silver (Ag), palladium (Pd), rhodium (Rh), iridium (Ir), or ruthenium (Ru).

Usable surfactants are one kind or two kinds of nonionic or ionic surfactants selected from a group consisting of: polyoxyethylene alkyl ether such as nonaethyleneglycol monohexadecyl ether; polyoxyethylene fatty acid esters; organic sulfates such as dodecyl sodium sulfate, dodecyl sodium benzenesulfonate; alkyl ammonium salts such as hexadecyltrimethyl ammonium bromide; amine oxides such as dodecyldimethyl amine oxide; polyoxyethylene sorbitan ester such as polyoxyethylene sorbitan monostearate; polyoxyethylene alkylphenyl ether; and polyoxyethylene polyoxypropylene block polymer; and such surfactants are added into the above solution to prepare a micelle forming solution.

Immersed or dispersed into the micelle forming solution is an arbitrary carrier such as graphite, followed by still standing, to cause micelles such as in semicylindrical shapes to be arranged and formed on the carrier substrate surface in a self-sustained manner.

Next, there is added a reducing agent water solution such as hydrazine into the starting reaction solution to cause a reductive reaction on the graphite substrate, thereby producing extremely thin film-like particles (thickness: 2 to 5 nm) each in a shape of disk, rod, plate, or sheet and each having a frame made of noble metal, i.e., a frame constituted of a structure mixedly including one or more kinds of noble metal elements selected from a group consisting of Au, Ag, Pd, Rh, Ir, and Ru at an arbitrary ratio. Note that although the noble metal salt solution has been added in the step of preparation of the micelle forming solution, the noble metal salt solution may be added after formation of micelles.

### EFFECT OF THE INVENTION

Unlike the conventional noble metal particles, the present invention provides the noble metal nanoparticles with only an extremely small amount of platinum source by virtue of the above-mentioned unique synthesis process, and the present invention can provide composites each including a carrier substrate and single crystalline ultrathin-film nanoparticles of noble metal represented by platinum and carried on the carrier substrate, in a manner that the nanoparticles exhibit unique and novel ultrathin-film shapes having controlled forms, sizes, and arrangements and are controlled to have thicknesses in "nm" ranges with an extremely fine precision. Even without separation of the noble metal nanoparticles from the composites, such composites can be each directly and exemplarily utilized in themselves as: a fuel ceil-oriented catalyst configured to react hydrogen with oxygen and to extract electrical energy; a catalyst such as utilized in vehicular exhaust gas purification, petrochemical industry, synthesis gas production, production of medicine and fat and oil, and the like; and an ultra fine sensor material, electrode material, and the like; so that the composites are expected to remarkably contribute to development of the industry.

### BEST MODE FOR CARRYING OUT THE INVENTION

The invention in the present application possesses the above features, and the present invention will be concretely described based on embodiments and the accompanying drawings. However, these embodiments merely disclose one aspect of the present invention, and are never intended to limit the present invention. Namely, the present invention resides in a production method of single crystalline thinfilm-like platinum particles characterized in that the single crystalline thinfilm-like platinum particles are grown within micelles immobilized on a carrier substrate such as made of graphite as noted above.

The production method of the present invention can also be applied to noble metals (Au, Ag, Pd, Rh, Ir, and Ru) in addition to platinum, thereby allowing diversified thinfilm-like noble metal particles. As the substrate for immobilizing micelles thereon, it is possible to use substrates comprising inorganic substances such as mica, silica, and the like, in addition to graphite.

Further, the production method has its essential feature to reduce a metal salt within micelles immobilized on a graphite substrate to thereby induce thinfilm-like noble metal particles of particular dimensions and in shapes of disk, rod, plate, or sheet, in a manner to control forms, sizes, and arrangements of the thinfilm-like noble metal particles produced on the substrate. Concretely, these characteristics can be varied by kinds, combinations, concentrations, and the like of surfactants, including forms thereof. Thus, the embodiments to be described hereinafter exhibit mere examples of such configurations of surfactants, and the present invention is not limited to such embodiments.

The platinum thinfilm-like particles in sheet-like shapes obtained by the present invention are analogous to platinum thinfilm-like particles in sheet-like shapes described in the previously mentioned prior reference (non-patent reference 27), in terms of shape. However, the platinum thinfilm-like particles in sheet-like shapes obtained by such a report are not proven nor mentioned to be single crystalline.

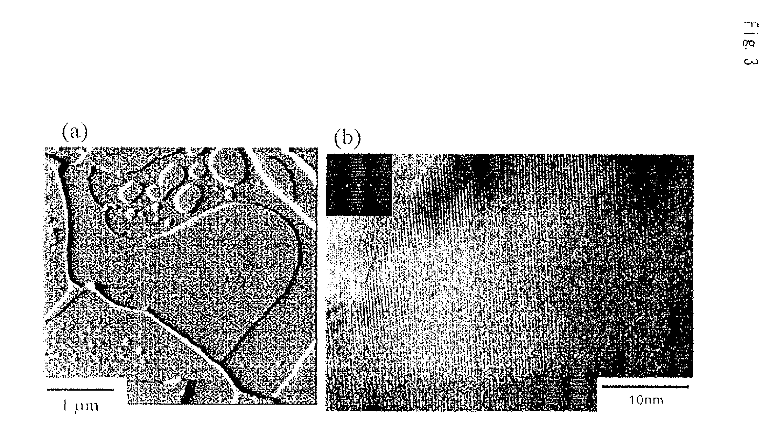

Contrary, in the present invention as apparent from an electron photomicrograph (FIG. 3) of Example 1 to be described hereinafter, even those platinum thinfilm-like particles in sheet-like shapes which each have one side of 50 nm or more have been proven to be single crystals, respectively, based on lattice patterns thereof, and are basically and remarkably different from the conventional. Further, there has also been confirmed formation of a platinum thinfilm-like particle domain having one side of 1,000 nm or more, by an atomic force photomicrograph. Also, the production method of the platinum thinfilm-like particles of the present invention is perfectly different from the prior reference.

While the prior reference utilizes spaces between graphite layers, the present invention utilizes micelles immobilized on a graphite substrate as reaction fields, respectively. Further, based on the difference of the reaction manner, although it is difficult in the prior reference to collect platinum thinfilm-like particles produced between graphite layers, it is possible in the present invention to readily collect the platinum thinfilm-like particles such as by ultrasonic irradiation because the platinum thinfilm-like particles are produced at the graphite substrate surface.

Further, since platinum thinfilm-like particles are produced at a solid surface, it is possible to carry the platinum particles on the solid surface at an extremely small thickness in a nano-order, and to carry the particles at an arbitrary coating ratio between smaller and larger values. This allows expensive noble metals such as platinum to be effectively utilized.

The present invention as described above is configured to immerse a substrate into a liquid phase containing noble metal ions in the presence of a surfactant(s) to fix surfactant micelles onto the substrate in a manner to grow thinfilm-like noble metal crystals by virtue of a reductive reaction within the micelles restricted by the substrate, such that the produced thinfilm-like noble metal particles are formed not only into mere nanoparticles but also into shapes of disk, rod, plate, or sheet. This is the essential point of the present invention.

Against the present invention, also the patent-related reference (patent-related reference 7) describes that noble metal nanoparticles are deposited in a solution by virtue of an action of a reducing agent, from a liquid phase containing noble metal ions in the presence of a surfactant. However, the configurations of the noble metal nanoparticles obtained by such a report are bulky and massive particles, and are never proven nor mentioned to be single crystalline. To the contrary, the present invention provides thinfilm-like noble metal nanoparticles which are not simple nanoparticles but are arbitrarily controllably formed into particles in shapes of disk, rod, or sheet with thicknesses of 2 to 5 nm as apparent from electron photomicrographs in Examples 1, 7, and 8, which is the fundamental and decisive difference of the present invention. As compared to simple particle forms, the extremely thin film-like forms exhibit such functions and effects that surface energies at peripheral portions of the thinfilm-like noble metal nanoparticles are increased, so that the thinfilm-like noble metal nanoparticles can be resultingly expected as catalyst materials having higher catalytic abilities.

Moreover, the present invention is configured to cause nanoparticles to be deposited on a substrate in a self-creating manner, thereby advantageously and extremely decreasing the usage amount of platinum to be required for carrying noble metal nanoparticles on a substrate, as compared with the patent-related reference 7. Additionally, the present invention is characterized in that nanoparticles can be not only deposited on a substrate in a self-creating manner but also simultaneously controlled in arrangement of nanoparticles themselves on the substrate. This leads to a remarkable difference from the patent-related reference 7 which is configured to simply reduce and deposit nanoparticles from interior of a solution onto a substrate.

### BRIEF DESCRIPTION OF THE DRAWINGS

FIG. 1 is a schematic view of a production process of thinfilm-like platinum particles (platinum nano-sheets) to be produced in Tween60 rod-like micelles as reaction fields at a graphite/solution interface.

FIG. 2 is a view of images observed within a liquid by an atomic force microscope (AFM) of forms of rod-like micelles formed at a graphite/solution interface, in cases of (a) without addition of a platinum chloride salt, and (b) with addition of a platinum chloride salt.

FIG. 3 is a view of (a) an AFM image and (b) a high-resolution transmission electron microscope (TEM) image of sheet-like thinfilm-shaped platinum particles produced in Tween60 rod-like micelles as reaction fields at a graphite/solution interface.

FIG. 4 is a view of (b) an image of forms of Tween60 rod-like micelles formed at a graphite/solution interface, observed within a liquid by an atomic force microscope (AFM), (a) an AFM image of thinfilm-like platinum particles produced in the rod-like micelles as reaction fields, and (c) a major axis direction (arrow) of rod-like micelles and an orientation of thinfilm-like platinum particles.

FIG. 5 is a view of AFM images of thinfilm-like platinum particles produced in Tween60/C₁₂EO₉ mixed rod-like micelles as reaction fields at a graphite/solution interface.

FIG. 6 is a view of phase images by AFM observation of (a) thinfilm-like palladium particles (black portions) and (b) thinfilm-like gold particles (white portions) produced in Tween60 rod-like micelles as reaction fields at a graphite/solution interface.

FIG. 7 is a view of an AFM image and a transmission electron microscope (TEM) image of rod-like platinum particles produced in rod-like micelles by dodecyldimethyl amine oxide (protonation degree α=0.2) as reaction fields at a graphite/solution interface.

FIG. 8 is a graph of protonation degree (α) dependency of sizes of rod-like platinum particles produced in rod-like micelles by dodecyldimethyl amine oxide as reaction fields at a graphite/solution interface.

FIG. 9 is a schematic view of a synthetic method of disk-like platinum nanoparticles produced on a substrate and in nanofiber-like micelles of hexadecyltrimethyl ammonium hydroxide as reaction fields at a graphite/solution interface.

FIG. 10 is a view of an AFM image and a transmission electron microscope (TEM) image of disk-like platinum nanoparticles produced on a substrate and in nanofiber-like micelles of hexadecyltrimethyl ammonium hydroxide as reaction fields at a graphite/solution interface.

FIG. 11 is a view of (a) an AFM image of nanofiber-like micelles of hexadecyltrimethyl ammonium hydroxide at a graphite/solution interface, and (b) a transmission electron microscope (TEM) image of disk-like gold nanoparticles produced on a substrate and in the micelles as reaction fields.

FIG. 12 is a schematic view of a synthesis process of thinplate-like platinum particles (platinum nano-sheets) produced in Tween60 rod-like micelles as reaction fields at a graphite/solution interface.

The present invention will be more concretely described based on the drawings and embodiments.

FIG. 1 is a conceptual explanatory view of a process for forming thin platinum nanoparticles or nano-sheets according to the present invention as previously described in detail exemplarily based on platinum.

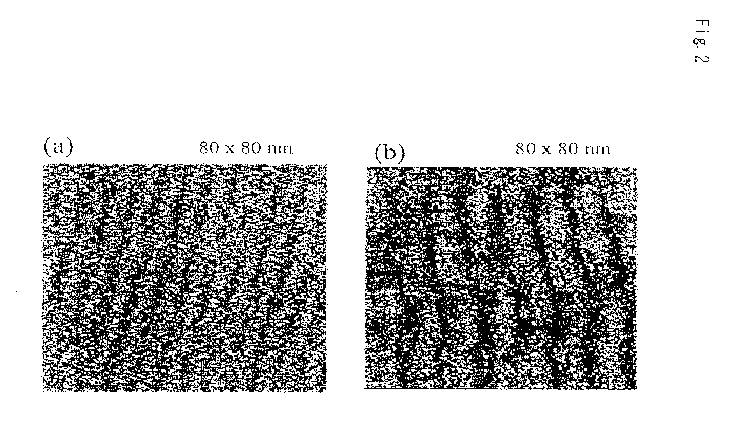

FIG. 2 is a view of images observed within a liquid by an atomic force microscope (AFM) of forms of rod-like micelles formed at a graphite/solution interface. In this figure, white striped domains are Tween60 rod-like micelles in cases of (a) without addition of a platinum chloride salt and (b) with addition of a platinum chloride salt, and it is recognized that forms of rod-like micelles are changed based on interactions between the platinum chloride salt and rod-like micelles.

FIG. 3 is a view of (a) an AFM image and (b) a high-resolution transmission electron microscope (TEM) image of thinfilm-like platinum particles produced in Tween60 rod-like micelle as reaction fields at a graphite/solution interface. From the AFM image, it was recognized that the thinfilm-like platinum particles had thicknesses of 2 to 5 nm, and surfaces thereof had a root-mean-square plane roughness of 0.15 nm. There was observed a lattice fringe with an interval of 0.23 nm (Pt(111) interlayer spacing) and a Fourier image thereof from the TEM image, so that the thinfilm-like platinum particles were each recognized to be constituted of a single piece of single crystal body as a whole of the particle.

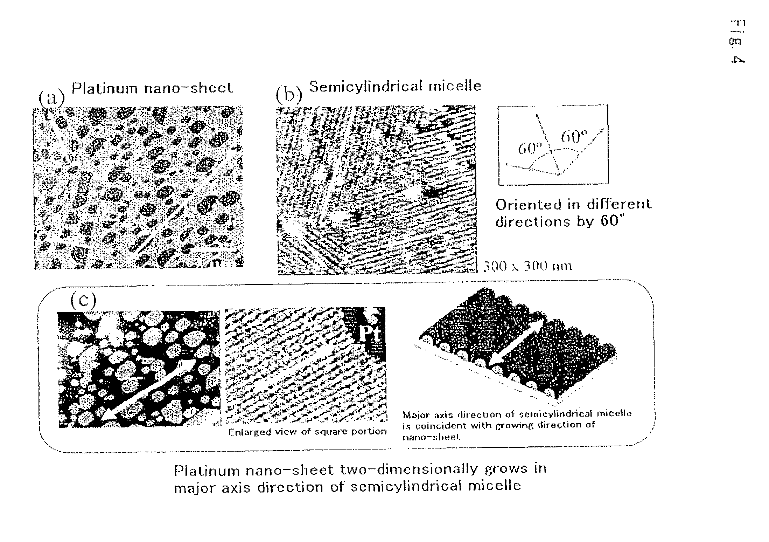

FIG. 4 shows (b) an AFM image of Tween60 rod-like micelles at a graphite/solution interface, and (a) an AFM image of thinfilm-like platinum particles (platinum nano-sheets) produced in the rod-like micelles as reaction fields. The AFM images exemplify that thinfilm-like platinum particles having thicknesses of 2 to 5 nm are produced on a substrate. Then, since platinum nano-sheets have characteristics to grow in major axis directions of rod-like micelles, it is observed that also the produced thinfilm-like platinum particles are oriented in directions different from one another by 60 degrees similarly to orientations of the rod-like micelles acting as reaction fields.

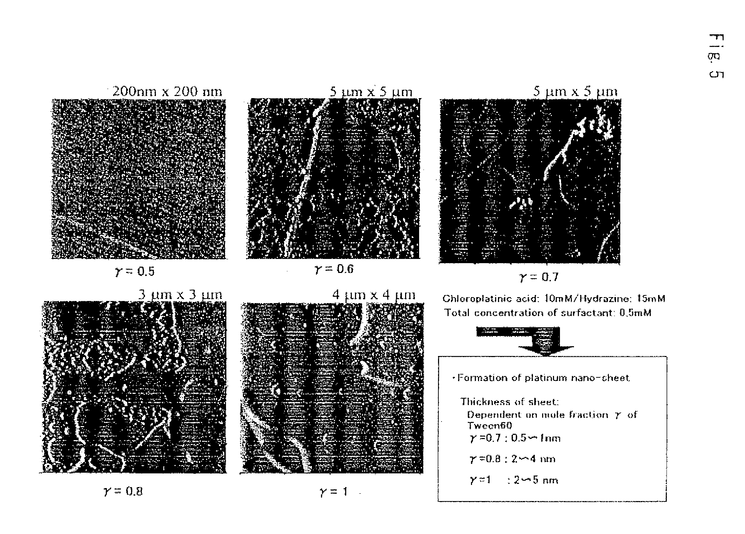

FIG. 5 is a view of AFM images of thinfilm-like platinum particles produced in Tween60/C₁₂EO₉ mixed rod-like micelles as reaction fields at a graphite/solution interface, and production of platinum thinfilm-like particles was recognized at mole fractions γ of 0.7 or more of Tween60. It was confirmed that thicknesses of platinum thinfilm-like particles depend on γ (i.e., 0.5 to 1 nm by γ of 0.7, and 2 to 4 nm by γ of 0.8, and 2 to 5 nm by γ of 1). Meanwhile, it was impossible to confirm production of platinum thinfilm-like nanoparticles by γ of 0.5 or less, and striped domains representing rod-like micelles were merely observed.

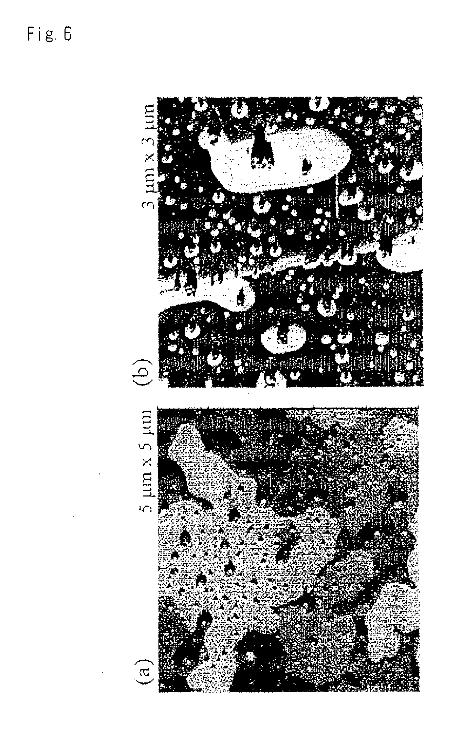

FIG. 6 shows phase images by AFM observation of (a) thinfilm-like palladium particles (black portions) and (b) thinfilm-like gold particles (white portions) produced in Tween60 rod-like micelles as reaction fields at a graphite/solution interface.

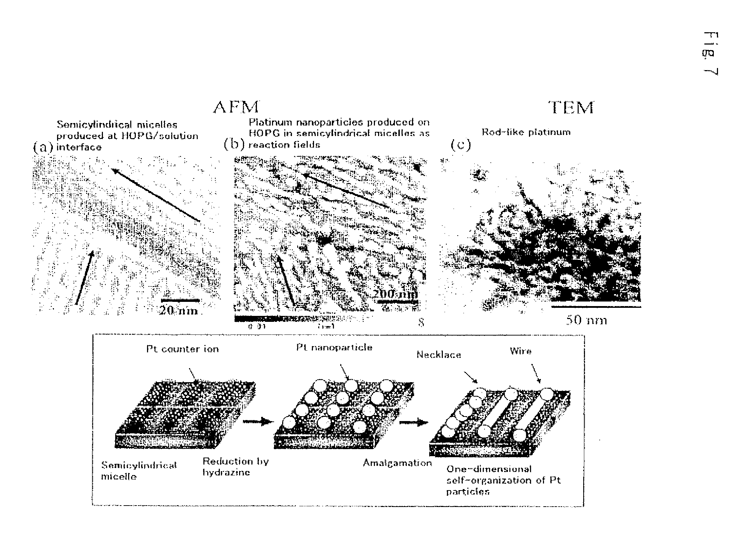

FIG. 7 shows (a) an AFM image of rod-like micelles (protonation degree α=0.2) of dodecyldimethyl amine oxide at a graphite/solution interface, (b) an AFM image of rod-like platinum nanoparticles produced on a substrate and in the micelles as reaction fields, and (c) a transmission electron microscope (TEM) image of the particles. The AFM images show that the platinum particles are rod-like shapes (or necklace-like shapes) having thicknesses of about 3 to 4 nm and diameters of about 10 nm, and are produced on the substrate.

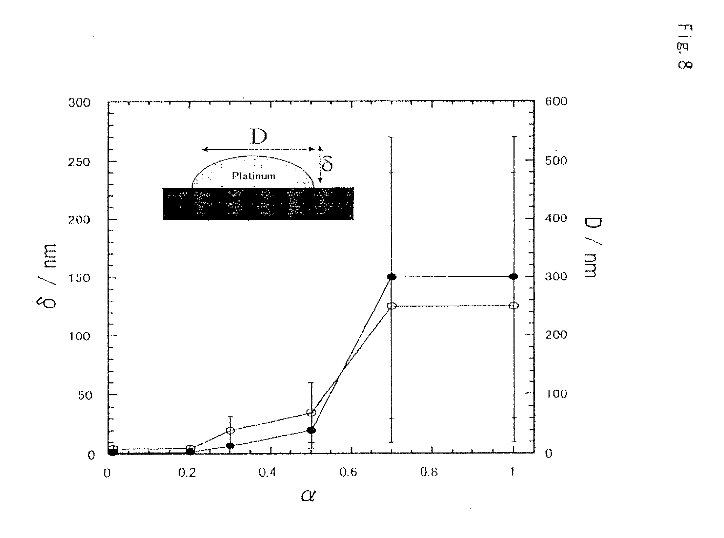

Further, identically to orientations (black arrows) of rod-like micelles, the produced rod-like platinum particles are observed to be also oriented (black arrows) in directions different from one another by 60 degrees. At this time, sizes and forms of platinum particles produced on the substrate were found to be controllable by a protonation degree α of rod-like micelles (FIG. 8). Namely, it is shown that sizes and the like of particles depend on the protonation degree α, according to FIG. 8.

Here, the protonation degree α is defined as α=[cation type amine oxide surfactant]/[cation type amine oxide surfactant+ nonionic type amine oxide surfactant]. δ represents a thickness of a platinum particle, and D represents a diameter thereof. It was proven that platinum nanoparticles are produced only when a protonation degree is 0.3 or less.

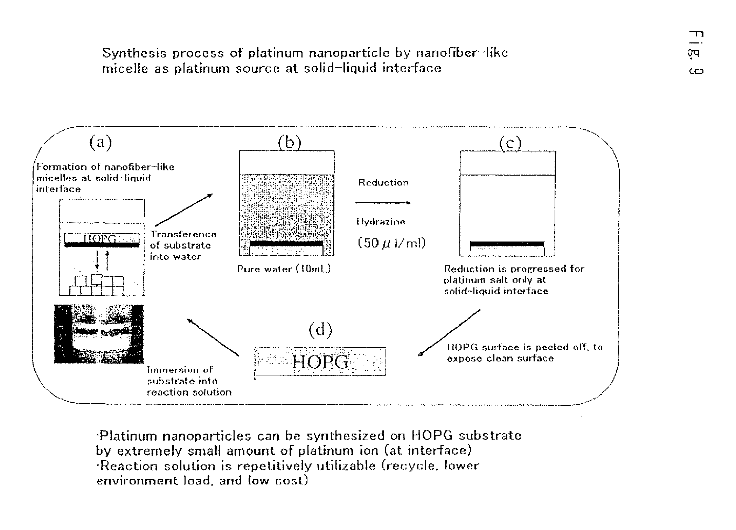

FIG. 9 schematically shows a synthetic method of disk-like platinum nanoparticles produced on a substrate and in nanofiber-like micelles of hexadecyltrimethyl ammonium hydroxide as reaction fields at a graphite/solution interface.

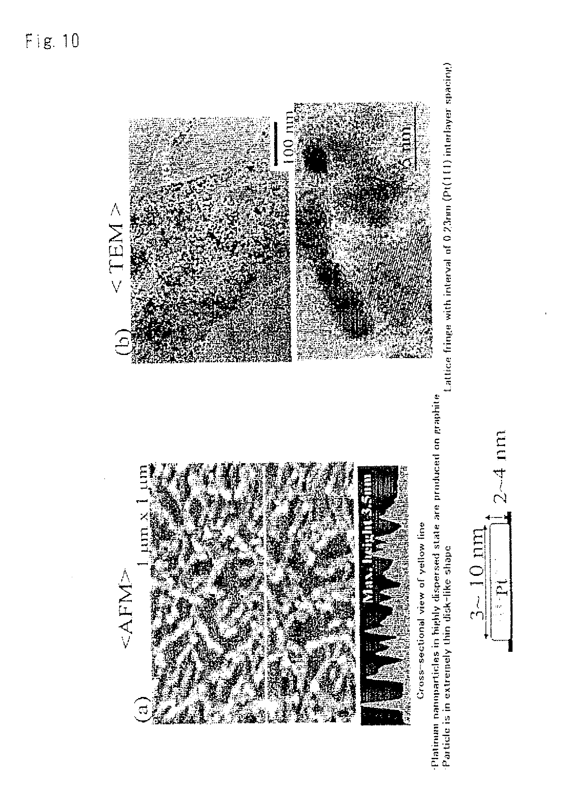

FIG. 10 shows (a) an AFM image and (b) a transmission electron microscope (TEM) image of disk-like platinum nanoparticles produced on a substrate and in nanofiber-like micelles of hexadecyltrimethyl ammonium hydroxide as reaction fields at a graphite/solution interface. Based on the AFM image and TEM image of this figure, it is shown that disk-like platinum nanoparticles having thicknesses of about 3 nm are produced in a highly dispersed state on the substrate.

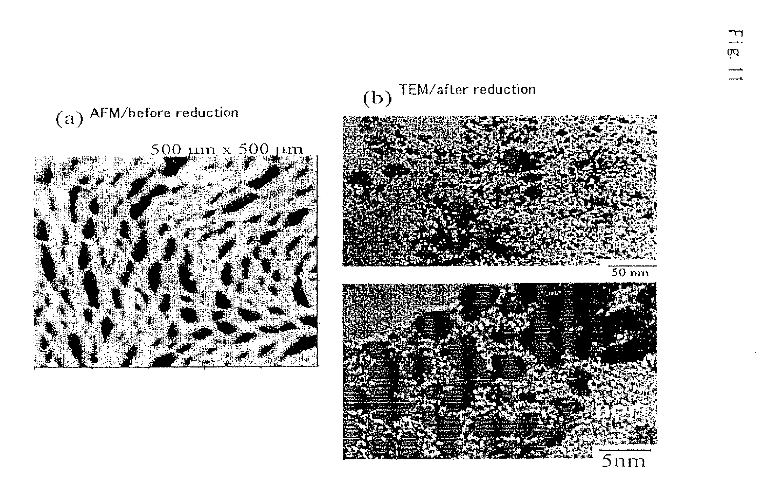

FIG. 11 shows (a) an AFM image of nanofiber-like micelles of hexadecyltrimethyl ammonium hydroxide at a graphite/solution interface, and (b) a transmission electron microscope (TEM) image of disk-like gold nanoparticles produced on a substrate and in the micelles as reaction fields. Based on the AFM image and TEM image, it is shown that disk-like gold nanoparticles having thicknesses of about 1 to 3 nm are produced in a highly dispersed state on the substrate.

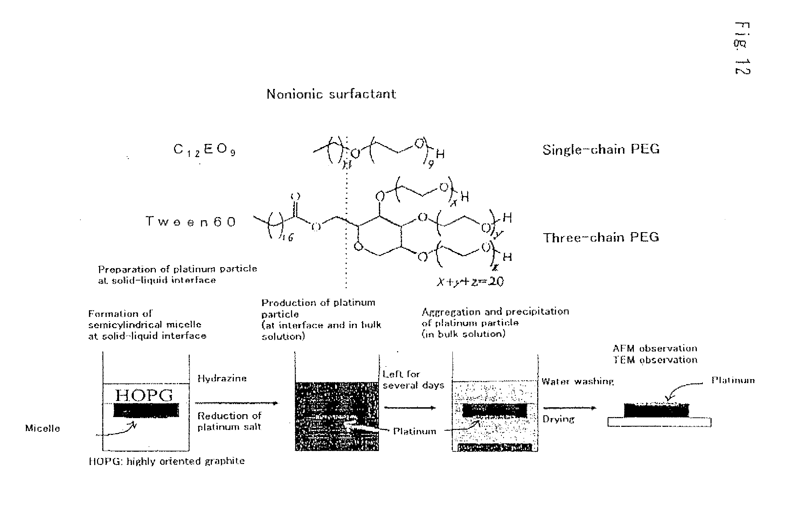

As described later, FIG. 12 schematically shows a synthesis process of thinplate-like platinum particles (platinum nano-sheets) produced in Tween60 rod-like micelles as reaction fields at a graphite/solution interface.

Note that although the present invention will be concretely disclosed based on Examples, the present invention is not limited thereto.

### Example 1:

Added into a weighing bottle was 10 mL of a weighed water solution (0.5 mM) of polyoxyethylene (20) sorbitan monostearate (Tween60: product name sold by Atlas Powder Company in U.S.). Immersed into this solution was a highly oriented graphite substrate (HOPG), thereby causing semicylindrical rod-like micelles to be spontaneously formed at a graphite/solution interface.

Next, 1 mL of hexachloro platinate water solution (0.1 M) was added, thereby establishing a reaction solution. At this time, rod-like micelles adsorbed on the graphite substrate surface cooperated with platinum complex compounds to form composites which acted as templates for growth of thinfilm-like platinum particles. FIG. 2 shows images observed within a liquid by an atomic force microscope (AFM) of shapes of rod-like micelles formed at a graphite/solution interface.

Subsequently, 1.5 molar equivalent of hydrazine relative to chloroplatinic acid was added to the reaction solution held at 25°C to conduct chemical reduction of the platinum chloride salt, and the solution was left stand still as it was for 48 hours. In this way, thinfilm-like platinum particles were grown within rod-like micelles immobilized on the graphite substrate. At this time, since massive platinum particles (bulk particles) produced in the solution were to be possibly deposited on the graphite substrate surface, the reaction was conducted by fixingly directing the graphite substrate downwardly so as to prevent deposition of bulk particles.

This is because, in addition to platinum particles to be controlledly formed within micelles as reaction fields on the carrier substrate, part of the platinum salt contained in the solution is to be possibly and directly reduced by the action of hydrazine and deposited as bulky and massive platinum particles which precipitate onto the carrier substrate and are thus deposited thereon. To avoid it, the graphite substrate was downwardly oriented and fixed.
The reductive reaction to be conducted in micelles as reaction fields is distinguished from deposition of massive particles in that the former resides in reduction within micelles downwardly oriented and formed in a self-creating manner on the downwardly oriented substrate so as to avoid deposition of massive particles due to precipitation. At the time when deposition and precipitation of platinum particles by hydrazine were completed after lapse of several days, the graphite substrate was taken out of the solution, followed by drying, thereby enabling obtainment of thinfilm-like platinum particles on the graphite substrate surface (FIG. 12).

The sheet-like thinfilm platinum particles thus formed on the graphite substrate surface exhibited an AFM image as shown in FIG. 3(a). Spherical domains originated from thinfilm-like platinum particles were observed, and it was shown that the thinfilm-like platinum particles had thicknesses of 2 to 5 nm based on a cross-sectional view of the thinfilm-like platinum particles obtained as the AFM image. It was further confirmed that surfaces of the thinfilm-like platinum particles had a root-mean-square plane roughness of 0.15 nm, thereby enabling confirmation that the surfaces were flat and smooth at an atomic level. According to observation (FIG. 3(b)) by a transmission electron microscope, there was observed a lattice fringe with an interval of 0.23 nm (Pt(111) interlayer spacing) and a Fourier image thereof, so that the thinfilm-like platinum particles were each recognized to be constituted of a single piece of single crystal body as a whole of the particle. This allowed for recognition of obtainment of single crystalline platinum thinfilm-like particles according to the present invention.

### Example 2:

### [Concentration effect of chloroplatinic acid water solution on production of platinum thinfilm-like particle in sheet-like shape]

Semicylindrical rod-like micelles were spontaneously formed at graphite/solution interfaces, by the same procedures and under the same conditions as Example 1, respectively. Next, added into the water solutions including precursory rod-like micelles at the graphite substrate surfaces, were chloroplatinic acid water solutions so as to attain their concentrations of 0.02 mM, 0.1 mM, 1 mM, and 10 mM, respectively.

Next, 2 molar equivalent of hydrazine relative to chloroplatinic acid was added into each reaction solution held at 25°C, followed by reaction for 24 hours as it was. In this way, thinfilm-like platinum particles were grown within rod-like micelles immobilized on the graphite substrates, respectively. At this time, the graphite substrates were downwardly oriented and fixed, to avoid deposition of massive platinum particles produced in the solutions onto the graphite substrate surfaces, respectively. After precipitation of massive platinum particles produced in the solutions, the graphite substrates were taken out of the solutions, followed by drying, to obtain thinfilm-like platinum particles on the graphite substrate surfaces, respectively.

In cases of the 0.1 mM and 1 mM concentrations of chloroplatinic acid water solutions, platinum particles were obtained at the graphite substrate surfaces, and confirmed to be platinum thinfilm-like particles having thicknesses of about 2 to 5 nm from cross-sectional views of the thinfilm-like platinum particles obtained from AFM images, respectively. On the other hand, in case of the 10 mM concentration of chloroplatinic acid water solution, there was confirmed, by an AFM image, production of platinum thinfilm-like particles each having a three-dimensionally stacked structure of a thickness of 10 nm or more based on a structure including stacked platinum thinfilm-like particles each having a thickness of about 4 nm. In turn, there was not confirmed production of platinum thinfilm-like particles, in case of the 0.02 mM concentration of chloroplatinic acid water solution.

### Example 3:

### [Production of platinum thinfilm-like particle in sheet-like shape by two-kind mixed surfactant system]

Semicylindrical rad-like micelles were spontaneously formed at graphite/solution interfaces, by the same procedures and under the same conditions as Example 1, respectively, by each adopting a two-kind mixed system of Tween60 and nonaethyleneglycol monohexadecyl ether (C₁₂EO₉: product name: Nikkol BL-9EX by Wako, Japan) as surfactants, instead of Tween60 only. The whole concentrations of surfactants were fixed at 0.5 mM, and the mole fractions (γ) of Tween60 in the two-kind mixed systems were varied, respectively.

Next, 1.5 molar equivalent of hydrazine relative to chloroplatinic acid was added into each reaction solution held at 25°C, followed by reaction for 24 hours as it was. In this way, thinfilm-like platinum particles were grown within rod-like micelles immobilized on the graphite substrates, respectively. At this time, the graphite substrates were downwardly oriented and fixed, to avoid deposition of massive platinum particles produced in the solutions onto the graphite substrate surfaces, respectively. After precipitation of massive platinum particles produced in the solutions, the graphite substrates were taken out of the solutions, followed by drying, to obtain thinfilm-like platinum particles on the graphite substrate surfaces, respectively.

According to AFM observation, production of platinum thinfilm-like particles were confirmed by γ of 0.7 or more (FIG. 5). From cross-sectional views of thinfilm-like platinum particles obtained as AFM images, thicknesses of platinum thinfilm-like particles were confirmed to depend on γ (1 to 2 nm when γ=0.7; 2 to 4 nm when γ=0.8 ; and 2 to 5 nm when γ=1). On the other hand, production of platinum thinfilm-like particles was not confirmed when γ was 0.5 or less.

### Example 4:

### [Effect of polyoxyethylene chain lengths of polyoxyethylene alkyl ethers on production of platinum thinfilm-like particle in sheet-like shape]

Semicylindrical rod-like micelles were spontaneously formed at graphite/solution interfaces, by the same procedures and under the same conditions as Example 1, by adopting Polyoxyethylene DodecylEther (C₁₂EO₂₃: product name: Brij 35, by KANTO CHEMICAL CO., INC.), Polyoxyethylene 40 Stearate (C₁₈EO₄₀: product name Myrh52 by SIGMA Inc., U.S.), and Polyoxyethylene 100 Stearate (C₁₈EO₁₀₀: product name Myrh59 by SIGMA Inc., U.S.), instead of the surfactant Tween60, respectively. Concentrations of the surfactants were each fixed at 1 mM.

Next, 1.5 molar equivalent of hydrazine relative to chloroplatinic acid was added into each reaction solution held at 25°C, followed by reaction for 24 hours as it was. In this way, thinfilm-like platinum particles were grown within rod-like micelles immobilized on the graphite substrates, respectively. At this time, the graphite substrates were downwardly oriented and fixed, to avoid deposition of massive platinum particles produced in the solutions onto the graphite substrate surfaces, respectively. After precipitation of massive platinum particles produced in the solutions, the graphite substrates were taken out of the solutions, followed by drying, to obtain thinfilm-like platinum particles on the graphite substrate surfaces, respectively.

Obtained particles were subjected to AFM observation, thereby confirming production of platinum thinfilm-like particles in case of C₁₈EO₄₀. From a cross-sectional view obtained as an AFM image of he thinfilm-like platinum particles, the platinum thinfilm-like particles were each about 5 to 25 nm in thickness. However, in case of C₁₈EO₁₀₀, particles were confirmed to be each increased to several hundreds nanometers in thickness. On the other hand, production of platinum thinfilm-like particles was not confirmed, in case of adoption of C₁₂EO₂₃. In this way, it was confirmed that thicknesses of platinum thinfilm-like particles increased as polyoxyethylene chain lengths of used polyoxyethylene alkyl ethers were increased.

### Example 5:

### [Application of present invention to production of other noble metal particle: Production of palladium thinfilm-like particle]

Semicylindrical rod-like micelles were spontaneously formed at a graphite/solution interface, by the same procedure and under the same condition as Example 1, by adopting disodium palladium chloride, instead of hexachloro platinate.

Next, 1.5 molar equivalent of hydrazine relative to chloroplatinic acid was added into the reaction solution held at 25°C, followed by reaction for 24 hours as it was. In this way, thinfilm-like palladium particles were grown within rod-like micelles immobilized on the graphite substrate. At this time, the graphite substrate was downwardly oriented and fixed, to avoid deposition of massive palladium particles produced in the solution onto the graphite substrate surface. After precipitation of massive palladium particles produced in the solution, the graphite substrate was taken out of the solution, followed by drying, to obtain thinfilm-like palladium particles on the graphite substrate surface.

FIG. 6(a) shows an AFM image of thinfilm-like palladium particles produced on the graphite substrate surface. The domains visible in black are thinfilm-like palladium particles, respectively, and the thinfilm-like palladium particles were confirmed to each have a thickness of about 5 nm from a cross-sectional view of the thinfilm-like palladium particles obtained as the AFM image.

### Example 6:

### [Application of present invention to production of other noble metal particle: Production of gold thinfilm-like particle]

Semicylindrical rod-like micelles were spontaneously formed at a graphite/solution interface, by the same procedure and under the same condition as Example 1, by adopting tetrachloro aurate, instead of hexachloro platinate.

Next, 1.5 molar equivalent of hydrazine relative to chloroauric acid was added into the reaction solution held at 25°C, followed by reaction for 24 hours as it was. In this way, thinfilm-like gold particles were grown within rod-like micelles immobilized on the graphite substrate. At this time, the graphite substrate was downwardly oriented and fixed, to avoid deposition of massive gold particles produced in the solution onto the graphite substrate surface. After precipitation of massive gold particles produced in the solution, the graphite substrate was taken out of the solution, followed by drying, to obtain thinfilm-like gold particles on the graphite substrate surface.

FIG. 6(b) shows an AFM image of thinfilm-like gold particles produced on the graphite substrate surface. The domains visible in white are thinfilm-like gold particles, respectively, and the thinfilm-like gold particles were confirmed to each have a thickness of 2 to 5 nm from a cross-sectional view of the thinfilm-like gold particles obtained as the AFM image. Only, gold spherical particles grown in massive forms were also observed, in addition to thinfilm-like gold particles.

### Example 7:

### [Production of thinfilm-like platinum particle having rod-like shape]

Semicylindrical rod-like micelles were spontaneously formed at a graphite/solution interface, by the same procedure and under the same condition as Example 1, by adopting dodecyldimethyl amine oxide (Fulka Corp.), instead of the surfactant Tween60. The concentration of the surfactant was fixed at 10 mM.

Next, 0.1 molar equivalent (1 mM) of chloroplatinic acid relative to dodecyldimethyl amine oxide was added into the reaction solution held at 25°C, to form composites of rod-like micelles and platinum ions. Subsequently, hydrazine (10 mM) was added into the reaction solution held at 25°C, followed by reaction for 24 hours as it was. In this way, thinfilm-like platinum particles having rod-like shapes were grown within rod-like micelles immobilized on the graphite substrate. At this time, the graphite substrate was downwardly oriented and fixed, to avoid deposition of massive platinum particles produced in the solution onto the graphite substrate surface. After precipitation of massive platinum particles produced in the solution, the graphite substrate was taken out of the solution, followed by drying, to obtain thinfilm-like platinum particles having rod-like shapes (or necklace-like shapes) on the graphite substrate surface (see FIG. 7(b)).

From an AFM image, rod-like platinum particles having thicknesses of about 2 to 4 nm and diameters of about 10 nm were seen to be produced on the substrate. It was observed that also the produced thinfilm-like platinum particles were oriented in directions different from one another by 60 degrees (arrows in FIG. 7(b)) similarly to orientations of the rod-like micelles (arrows in FIG. 7(a)). At this time, sizes of platinum particles produced on the substrate were found to be controllable by the protonation degree (FIG. 8).

### Example 8:

### [Production of thinfilm-like platinum particle having disk-like shape]

Fibrous micelles were spontaneously formed at a graphite/solution interface, by a procedure and under a condition similar to those in Example 1, by adopting cethyltrimethyl ammonium hydroxide (TOKYO CHEMICAL INDUSTRY Co., Ltd.), instead of the surfactant Tween60. The concentration of the surfactant was fixed at 10 mM. Next, 1.2 molar equivalent (12 mM) of chloroplatinic acid relative to cethyltrimethyl ammonium hydroxide was added into the reaction solution held at 25°C. This produced precipitation of white solid crystal comprising composites of chloroplatinic acid and the surfactant (FIG. 9(a)). In this solution, platinum ions caused from the white solid crystal were present.

Subsequently, immersed into this reaction solution was a graphite (HOPG) substrate, thereby causing fibrous micelles complexed with platinum ions to be spontaneously formed on the graphite substrate surface (FIG. 9(a)). Next, the graphite substrate carrying fibrous micelles thereon was immersed into pure water (FIG. 9(b)). The fibrous micelles were stable even within water. Hydrazine (10 mM) was added into this reaction solution held at 25°C, followed by reaction for 24 hours as it was (FIG. 9(c)). In this way, there were reduced only the platinum salts within fibrous micelles immobilized on the graphite substrate, thereby causing thinfilm-like platinum particles having disk-like shapes to be grown from an extremely small amount of platinum source. The substrate was taken out of the solution and dried, to obtain thinfilm-like platinum particles having disk-like shapes on the graphite substrate surface. From an AFM image and a TEM image, it was confirmed that disk-like platinum particles having thicknesses of about 2 to 4 nm and diameters of about 3 to 10 nm were produced on the substrate (FIG. 10(a), (b)). It is possible to peel off the surface of the HOPG substrate to expose a clean surface(FIG. 9(d)), followed by immersing it into the reaction solution (FIG. 9(a)) and the same process as the above, thereby allowing platinum particles to be produced on the graphite substrate surface. Platinum ions are constantly supplied from the white solid crystal, thereby allowing the mother reaction solution to be used again and again insofar as the white solid crystal is present.

### Example 9:

### [Production of thinfilm-like gold particle having disk-like shape]

Fibrous micelles were spontaneously formed at a graphite/solution interface, by a procedure and under a condition similar to those in Example 8, by adopting cethyltrimethyl ammonium hydroxide (TOKYO CHEMICAL INDUSTRY Co., Ltd.). The concentration of the surfactant was fixed at 10 mM. Next, 1.2 molar equivalent (12 mM) of tetrachloroauric acid relative to cethyltrimethyl ammonium hydroxide was added into the reaction solution held at 25°C. This produced precipitation of white solid crystal comprising composites of chloroauric acid and the surfactant. In this solution, gold ions caused from the white solid crystal were present.

Subsequently, immersed into this reaction solution was a graphite (HOPG) substrate, thereby causing fibrous micelles complexed with gold ions to be spontaneously formed on the graphite substrate surface (FIG. 11(a)). Next, the graphite substrate carrying fibrous micelles thereon was immersed into pure water. The fibrous micelles were stable even within water. Hydrazine (10 mM) was added into this reaction solution held at 25°C, followed by reaction for 24 hours as it was. In this way, there were reduced only the gold salts within fibrous micelles immobilized on the graphite substrate, thereby causing thinfilm-like gold particles having disk-like shapes to be grown from an extremely small amount of gold source. The substrate was taken out of the solution and dried, to obtain thinfilm-like gold particles having disk-like shapes on the graphite substrate surface. From an AFM image and a TEM image, it was confirmed that disk-like gold particles having thicknesses of about 1 to 3 nm and diameters of about 3 to 5 nm were produced on the substrate (FIG. 11(b)).

### INDUSTRIAL APPLICABILITY

As described above in detail, the present invention has succeeded in obtaining single crystalline noble metal ultrathin-film determinate-form nanoparticles exhibiting ultrathin-film shapes of thicknesses of 2 to 5 nm and having arbitrary contours selected from disk, rod, plate, and sheet shapes, by virtue of a simple scheme to progress a reductive reaction in micelles made of two kinds of surfactants as reaction fields. The present invention has succeeded in obtaining ultrathin films having predetermined and controlled contour shapes on arbitrary substrates, without stacking particles one above the other, i.e., in single layer states, respectively, by a perfectly novel method. This means that expensive noble metals are enabled to be thinly carried on carrier surfaces, respectively, thereby exhibiting a remarkable significance. As compared with the conventional catalytic metal carrying methods, the present invention allows noble metal particles to be coated onto carrier surfaces in an extremely thin and uniform manner without stacking one above the other, with a carried amount which is only a few percents to a few tenth percents of the conventional, so that the present invention can be expected to be greatly utilized in catalyst design using noble metal elements represented by expensive platinum, and particularly in the field of fuel cell expected to largely grow.

Further, contour shapes of ultrathin-film nanoparticles are controllable to enable provision of ultrathin-film nanoparticles in forms of extremely thin and single crystalline thinfilm-like platinum particles having arbitrarily selected contours, in a manner to enable deposition of nanoparticles in arbitrary shapes suitable for carrier shapes to be used for deposition and coating, so that the ultrathin-film nanoparticles are enabled to be coated and designed with a better efficiency than the conventional deposition and coating in indeterminate shapes, thereby allowing the ultrathin-film nanoparticles to be greatly utilized in various material designs. Namely, the ultrathin-film nanoparticles enable expression of extremely significant activities not only in catalyst design but also in electrode design and sensor design, so that the ultrathin-film nanoparticles can be expected to naturally exhibit material saving effects as well as high level qualities and functions for material design in technical fields using extremely expensive noble metal materials.

Rare and expensive noble metal elements tend to be further increased in demand from now on, and in consideration thereof, it is not overstating that the present invention has a remarkable value and a significance at the highest level. Particularly, in consideration of the importance of development of fuel cell, the present invention has an extremely large significance in terms of noble metal particles represented by platinum having unique configurations and unique gaps. Thus, the present invention can be expected to be remarkably utilized from now on in various technical fields, in addition to catalyst and fuel cell fields.

## Claims

1. A single crystalline noble metal ultrathin-film determinate-form nanoparticle **characterized in that** the single crystalline noble metal ultrathin-film determinate-form nanoparticle is produced in a solid-liquid interface two-dimensional micelle acting as a reaction field and formed of one kind or two kinds of surfactants on a carrier substrate;
that the single crystalline noble metal ultrathin-film determinate-form nanoparticle is constituted of at least one kind of noble metal selected from a group consisting of platinum (Pt), gold (Au), silver (Ag), palladium (Pd), rhodium (Rh), iridium (Ir), and ruthenium (Ru); and
that the single crystalline noble metal ultrathin-film determinate-form nanoparticle exhibits an ultrathin film shape having a thickness in a range of 2 to 5 nm, and has an arbitrary contour selected from a shape of disk, rod, plate, and sheet.

2. The single crystalline noble metal ultrathin-film determinate-form nanoparticle of claim 1, **characterized in that** the carrier substrate is any one of graphite, mica, and silica.

3. The single crystalline noble metal ultrathin-film determinate-form nanoparticle of claim 1, **characterized in that** means for producing the noble metal nanoparticle in the micelle is provided by a reductive reaction conducted within the micelle as the reaction field.

4. The single crystalline noble metal ultrathin-film determinate-form nanoparticle of claim 3, **characterized in that** the reductive reaction is achieved by hydrazine.

5. The single crystalline noble metal ultrathin-film determinate-form nanoparticle of any one of claims 1 through 3, **characterized in that** the noble metal nanoparticle is picked up in a state carried by the carrier, by picking up the carrier substrate after the reductive reaction followed by drying.

6. The single crystalline noble metal ultrathin-film determinate-form nanoparticle of claim 5, **characterized in that** the noble metal particle picked up in the state carried on the carrier is collected by separating the noble metal particle from the carrier substrate.

7. The single crystalline noble metal ultrathin-film determinate-form nanoparticle of any one of claims 1 through 6, **characterized in that** the noble metal is platinum.

8. A production method of a single crystalline noble metal ultrathin-film determinate-form nanoparticle, **characterized in that** the method comprises the steps of:
preparing a micelle forming solution containing one kind or two kinds of surfactants at a micelle concentration;
subsequently immersing a carrier substrate into the micelle forming solution, to cause a micelle formed in a rod-like shape having a semicircle cross-section to be formed on and immobilized to the carrier substrate;
subsequently adding a solution containing a noble metal ion into the micelle to thereby contain the noble metal ion within the micelle; and
subsequently causing a reducing agent to act on the micelle containing therein the metal ion to thereby progress a reductive reaction within the immobilized micelle as a reaction field, to produce a single crystalline noble metal ultrathin-film determinate-form nanoparticle exhibiting a thin-film shape having a thickness in a range of 2 to 5 nm and having an arbitrary contour selected from a shape of disk, rod, plate, and sheet, by utilizing the immobilized micelle as a template.

9. The production method of a single crystalline noble metal ultrathin-film determinate-form nanoparticle of claim 8, **characterized in that** the two-dimensional micelle as the reaction field is adjusted in shape and size, to thereby adjust a shape and a size of the produced noble metal ultrathin-film determinate-form nanoparticle.

10. The production method of a single crystalline noble metal ultrathin-film determinate-form nanoparticle of claim 8, **characterized in that** the noble metal ion is one kind of ion selected from platinum (Pt), gold (Au), silver (Ag), palladium (Pd), rhodium (Rh), iridium (Ir), and ruthenium (Ru) ions.

11. The production method of a single crystalline noble metal ultrathin-film determinate-form nanoparticle of claim 8, **characterized in that** the surfactant for forming the two-dimensional micelle comprises one kind or two kinds of surfactants so that the noble metal thinfilm-like particle is controlled in thickness, shape, and size, by changing the kind of the surfactant, or the kinds of the surfactants and a mixing ratio therebetween.

12. The production method of a single crystalline noble metal ultrathin-film determinate-form nanoparticle of claim 8, **characterized in that** the noble metal ion within the micelle is changed in concentration, to control the single crystalline platinum thinfilm-like particle in thickness, size, and the like.

13. The production method of a single crystalline noble metal ultrathin-film determinate-form nanoparticle of claim 8, **characterized in that** the carrier is one kind of carrier selected from graphite, mica, and silica.

14. The production method of a single crystalline noble metal ultrathin-film determinate-form nanoparticle of claim 8, **characterized in that** the reductive reaction is achieved by hydrazine.

15. The production method of a single crystalline noble metal ultrathin-film determinate-form nanoparticle of any one of claims 8 through 14, **characterized in that** the noble metal nanoparticle exhibits a single two-dimensional film shape grown to have one side dimension of 50 nm or more.

16. The production method of a single crystalline noble metal ultrathin-film determinate-form nanoparticle of any one of claims 8 through 15, **characterized in that** noble metal is platinum.

17. A noble metal catalyst material, **characterized in that** the noble metal catalyst material includes the single crystalline noble metal ultrathin-film determinate-form nanoparticle of any one of claims 1 through 7, to be used as an active ingredient in catalyst design.

18. The noble metal catalyst material of claim 17, **characterized in that** the noble metal catalyst material is used in catalyst design for fuel cell.

19. The noble metal catalyst material of claim 17, **characterized in that** the noble metal catalyst material is used for designing a vehicular exhaust gas purifying catalyst.

20. A noble metal electrode material, **characterized in that** the noble metal electrode material includes the single crystalline noble metal ultrathin-film determinate-form nanoparticle of any one of claims 1 through 7, to be used as an electrode designing material for cell or electrolysis.

21. A noble metal sensor material, **characterized in that** the noble metal sensor material includes the single crystalline noble metal ultrathin-film determinate-form nanoparticle of any one of claims 1 through 7, to be used as a sensor designing material.
